(19) Europäisches Patentamt / European Patent Office / Office européen des brevets

(11) **EP 3 987 939 B1**

(12) **EUROPEAN PATENT SPECIFICATION**

(45) Date of publication and mention
of the grant of the patent:
**17.06.2026 Bulletin 2026/25**

(21) Application number: **21202620.7**

(22) Date of filing: **14.10.2021**

(51) International Patent Classification (IPC):
*A23B 7/04* (2006.01)     *A23B 7/06* (2006.01)
*A23B 7/158* (2006.01)     *A23N 12/02* (2006.01)

(52) Cooperative Patent Classification (CPC):
(C-Sets available)
**A23B 7/0408; A23B 2/792; A23B 7/153;**
**A23B 7/158; A23N 12/02; A23N 12/04;**
A23V 2002/00                (Cont.)

(54) **BLANCHER-COOLER-SYSTEM AND METHOD FOR TREATING A FOOD ITEM**

BLANCHIER-KÜHLSYSTEM UND VERFAHREN ZUR BEHANDLUNG EINES LEBENSMITTELS

SYSTÈME DE BLANCHIMENT-REFROIDISSEMENT ET PROCÉDÉ DE TRAITEMENT D'UN ALIMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.10.2020 DE 102020128006**

(43) Date of publication of application:
**27.04.2022 Bulletin 2022/17**

(73) Proprietor: **Arrow Lake AB**
**21225 Malmö (SE)**

(72) Inventors:
• **Vakfaris, George**
**Giannitsa, PC 58100 (GR)**
• **Khrulova, Camilla**
**34155 Vittarryd (SE)**
• **Bischhaus, Jürgen**
**24633 Löddeköpinge (SE)**

(74) Representative: **Hansson Thyresson AB**
**PO Box 73**
**201 20 Malmö (SE)**

(56) References cited:
WO-A2-2009/034565    CN-A- 101 849 600
JP-A- 2016 536 992     JP-A- H02 203 739
US-A1- 2003 156 978    US-B1- 6 514 459

(52) Cooperative Patent Classification (CPC): (Cont.)

C-Sets
A23V 2002/00, A23V 2200/10, A23V 2250/128

**Description**

FIELD OF THE INVENTION

The present invention relates to a process to address food contamination issues. This requires continuous control of food items at each step of the production process. Food Processing Industry is facing challenging times in terms of maintaining a balance of keeping the produce safe, complying with the firmer regulations and decreasing its impact on the environment and natural resources.

Based on the latest statistical insights published by the 'European food and drink industry (FoodDrinkEurope), Food & Beverage industrial sector is the largest manufacturing sector in terms of turnover, value-added and employment in the EU, gaining on the automobile and chemical industries. During the economic recession, while a sharp diminution was observed in other key manufacturing sectors, the food and drink industry continued to increase with a turnover € 1.192 billion in 2019. F&B sector has a substantial impact on the environment since it requires significant resources such as water and energy and produces an immense amount of waste and wastewater. Water is an essential input for the food and drink industry, as an ingredient, as a critical processing element and as a cooling agent in many production processes The European F&B industry is responsible for approximately 1.8% of Europe's total water use. Moreover, the only applicable solution to maintain the safety and hygiene of produce, equipment and production facilities are chemical based. Major supplier of chemicals for the food industry is ECOLAB with the annual revenue of 14 billion USA (2019 figures).

Looking into the concerns from the consumers, who demand a greener, more sustainable produce, and the legislations bodies for a more responsible way of production, using fewer resources while producing safer food in larger quantities calls for an urgent solution.

In many cases, the issue of food contamination due to the process is addressed by applying chlorine dioxide ($ClO_2$). Chlorine dioxide $ClO_2$ is the most frequently used disinfecting solution in the food industries. It is added and dissolved in the process water. $ClO_2$ chlorine dioxide is typically produced locally by a mixing generator. The solution is applied from 0.2 up to 0.4 mg/lt (ppm). Currently, 0.01 mg/kg (ppm) is the maximum amount permitted within EU Regulation (EC) No. 396/2005 as a Chlorate residual in the final product, while 3 $\mu$g/kg (0.003 ppm) of body weight and day is the permissible consumption according to EFSA (European Food Safety Authority) 2014,15.

The amount of water used during the full cycle of food production is astonishing and measure to reduce/optimize the usage of water for food processing is an important subject on the agenda. The processors are faced with a dilemma of finding the best technological practices to optimize the water usage, eliminate chemical presence in the water and on the product while making sure that the food we consume is safe: Water reuse, Mitigation of the process water, process wastewater treatments are among the practices that food industry professionals are encouraged to implement as part of their routines, which is only possible if/when the usage of traditional chemicals are significantly taken down.

Water is used in all phases of processing for washing (pre/post), transportation, peeling, blanching and hydrocooling of goods. Also, processed water is used for the cleaning of equipment and machinery. For non-blanched foods it is essential to disinfect them and $ClO_2$ was the only applicable solution until recently.

For blanched or cooked foods, thermal processing inactivates enzymes, eliminates pathogens and bacteria. However, most of the time, the post blanched product does not meet requirements, specifications and regulations. Another point of concern is the vulnerability of the blanched product following temperature fluctuations, that inevitable occur in the different stages of the blanching process.

A $ClO_2$ solution is then added to cooling water prior to freezing the food product to eliminate residual pathogens. Unfortunately, this step further increases chlorate residuals on the product, resulting in a high risk to trespass legal thresholds. This, in turn, progressively has become a major concern of the European Union (EU). The reason for the scrutinization of the chlorine-based remedies is the health risk that they pose for the consumer. In a 2015 study, EFSA (European Food Safety Authority) disclosed that the intake of chlorated by people via water and food is too high and causes health concerns for different groups, like children, people with existing thyroid problems among others.

Then $ClO_2$ solution is applied to cooling water prior to freezing to eliminate residual pathogens. Unfortunately, this step increases further chlorates residuals and it is a high risk to overcome the limits. The result is to disinfect the final product but retain the chlorates inside the food, which is a big concern.

The existence of the chlorates residuals in the produce consumed has become a progressively important matter for the European Union (EU). The primary source of the chlorates that is part of the people's diet relates to the drinking water, but recently the practices employed in fruit and vegetables industries has raised concerns. Such practices as the usage of chlorine-derived products to wash the produce, contact from the surfaces of the equipment that is cleaned with the chlorine-based products.

An alternative could be the application of UV (Ultraviolet) water disinfection in the last step prior to freezing. It is effective to eliminate remaining pathogens but it does affect only those parts that are in direct contact with the UV spectrum. If it is applied to water which also may carry solids it is generally blurred. Therefore, UV is non effective throughout the water volume and solids included.

## BACKGROUND OF THE INVENTION

Attention to ozone in the food and beverages segment has increased in recent years, mainly due to the shift of the consumer behaviour and their demand for greener and safer produce, awareness about the impact chemicals have on the environment and stricter regulations that processors are recommended to follow.

The focus is on processing IQF (individually quick frozen) yellow fruits and vegetables. The process consists of several steps: reception of the fruits, pre-washing, dicing/cutting & deston-ing, peeling, inspection, blanching, cooling and freezing. An average size factory process around 12 tons per hour of fruits, operating 22/7 during the season. Water usage is 200 m$^3$/h.

All the steps are aimed to preserve the natural nutrients of the product, the colour, taste, etc. to be easily recognized by the consumer, hence for consumer convenience. In fruits processing, several fruits are blanched prior to freezing or post processing. Blanching is the operation prior to Freezing or Canning for both fruits and vegetables to inactivate naturally present enzymes that cause changes in food flavour, colour, texture and remove trapped air to prevent further oxidation, it is also a safe and effective method to kill potentially-dangerous microbes and bacteria. An aspect of the food safety is the obligation of the processor to maintain the food safe for consumption, free from viruses, bacteria, pathogens as well as chemical residues, etc.

An area of high risk starts after blanching. The product is blanched up to 92 °C with either steam or hot water for 2-5 min. Next the product needs to be cooled down to stop the blanching process and not let it be cooked. This is achieved with spraying the product with cold water. This process to rapidly lower the temperature below the "dangerous" zone for reactivation of bacteria (typical the 65-25 °C temperatures zone) is carried out by applying cooling water and lowering the temperature of the fruits. This has also an operational advantage, allowing the product to enter the IQF freezer with an adequate temperature to ensure an optimal operation of the last one. After this step the product is placed on the conveyor belt towards the freezer. Water is a common denominator in all the processes and the big risk for contamination.

The cooling stage is achieved by applying cold water, sprayed directly on the product, which travels beneath on a conveyor belt. Spray nozzles spray the cool water, which is then recirculated and return to the chillers to be filtered and cooled down again, to repeat the cooling circle.

Process water itself contains bacteria and pathogens. Further, the fruits, even after blanching still carry number of bacteria residuals. Ozone is a strong oxidizer that leaves no residuals behind and complies with the EU environmental policy. Therefore, spraying with ozonated water, eliminates those bacteria, disinfects the cooling agent, process water in this case which is in direct contact with the food and prevent contamination after blanching.

## DESCRIPTION OF RELATED ART

US 2009/0277342 A1 focuses on spraying ozone water on a conveyor belt in between two processes, for example cooking and cooling (freezer temperature of the product is very quickly lowered to 18 °C on the surface of the product or Cold storage where the temperature of the product is slowly lowered to 18 °C on the surface) with the help of nozzles and sprayed water. The disadvantage of the prior art method is that the water used for decontamination during the transportation of the food item is not actively cooled. Without actively cooling the water, the crucial step of rapidly cooling the food item to a temperature below the "dangerous" zone for reactivation of bacteria (typical the 25 - 65 °C temperature zone) right after the blanching takes more time thus increasing the danger of contamination of the food during the transport.

The amount of water used for this step is large due to the fact that after rinsing the food item the water is not recirculated

US 2003/156978 A1 discloses an ozone sanitation device for food products according to the preamble of claim 1.

WO 2009/034565 A2 discloses a system for preparation of fresh-cut produce using electrolysis to produce free chlorine.

JP H02 203739 A discloses a sterilizing apparatus for food using ozone.

US 6 514 459 B1 discloses a treatment plant using ozonated water.

## OBJECT OF THE INVENTION

It is, therefore, an object of the present invention to provide a method for minimizing food contamination with the help of ozonated water and to reduce the water consumption in food processing.

## BRIEF SUMMARY OF THE INVENTION

To solve the objective problem a system for treating a food item is suggested, comprising a recirculating water system configured to apply recirculating water to a food item where the recirculating water system is configured to introduce ozone into the recirculating water. The recirculating water system is configured to apply recirculating water to a food item after ozone is introduced into the recirculating water.

The recirculating water is configured to pass the recirculating water through a chiller for cooling the water to a temperature in the range of 1-10°C, preferably 2-7 °C, most preferably 3-5 °C.

A collecting system is configured to collect water from a cooler. The water may be filtered to remove fruit residuals, pumped to a chiller and cooled down to a temperature within said temperature range before recirculating.

The system may be equipped with a monitoring device configured for measuring the concentration of ozone dissolved in the recirculating water and optionally the pH value of the water.

Based on this measurement a device for adjusting the flow rate of the ozone may be used to adjust the ozone concentration in the water and may keep it at a constant level. The system may be integrated in the cooling part of a blancher-cooler and configured to be sprayed directly on a food item for cooling said food item and reducing the microbiology load of said food item. The Ozone may be injected into at least one individual processing lines, where every individual processing line may operate separately from the others. Water flow rates in each line may be constant, where water temperature and ozone concentration are may be adjustable. The injection of ozone in liquid water may be carried out by using a Venturi injector or direct gas injection. After the injection a mixture of recirculating water and gaseous ozone may pass through a static mixer before being sprayed onto the product. All hydraulic components of the system may be made from stainless steel.

To solve the objective problem also a method for treating a food item is suggested, wherein the food item may be treated with heat inside a blancher-cooler 100. For cooling the food item in the cooling part of the blancher-cooler 100 the system described above may collect and recirculate the ozonated water while cooling it to a temperature in the range of 1-10°C, preferably 2-7 °C, most preferably 3-5 °C;

The monitored application of ozone into the cooling water recirculating system to obtain a chemical-free treatment of the cooling water, control of microbiology load of the produce, hygiene control of the equipment in contact with the ozonated water and safe water reuse is described.

Ozone is introduced into a recirculating cooling water system that is used in industrial coolers, as part of the fruits/vegetables/heat resistant fungi processing methods in the food industry. Ozonated cooled water is directly sprayed onto the product to instantly lower the temperature after blanching to stop the blanching process and treat the surface of the product from microbiological load.

The goal is to disinfect the water that is sprayed on the blanched product, the foods themselves and finally cool them down to achieve a non-chemical treatment of the produce without unsettling the benefits of the blanching technology but enhancing and/or preserving the results of enzymatic deactivation once the blanching phase is over.

BRIEF DESCRIPTION OF THE SEVERAL VIEWS OF THE DRAWINGS

Other objects and advantages of the present invention may be ascertained from a reading of the specification and appended claims in conjunction with the drawings therein. For a more complete understanding of the present invention, reference is established to the following description of embodiments made in connection with accompanying drawings. The possibilities to solve the problem are not limited to the embodiments. The exemplary embodiments are shown schematically in the figures. The same reference numerals in the individual figures designate the same or functionally identical or with respect to their functions corresponding elements. In detail the figures show:

Fig. 1 a graph of the general dependency of gas solubility in water on the water temperature;
Fig. 2 a food processing line consisting of a blancher-cooler, a combination of conveyor belts and a freezer;
Fig. 3 a connections scheme of a recirculating water system connected to a blancher-cooler;
Fig. 4 an inside view of a blancher-cooler comprising a system using the solution disclosed in this document;
Fig. 5 typical values for samples analysis of the monitoring experiments for peach slices samples;
Fig. 6 analogue Fig. 5: Typical values for samples of peach dices (10 cm x 10 cm);
Fig. 7 analogue Fig. 5: Typical values for samples of apricot slices;
Fig. 8 analogue Fig. 5: Typical values for samples of peach dices (10 cm x 10 cm).

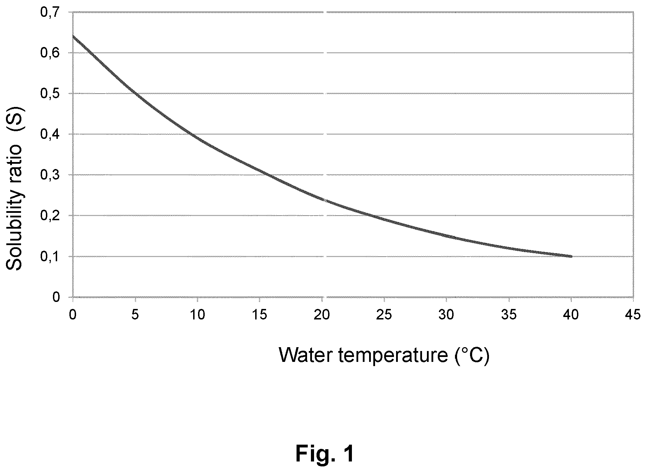

Fig. 1 shows a graph of the general dependency of gas solubility in water on the water temperature revealing the water temperatures with high solubility. The chiller 300 is used in the solution in order to provide a water temperature with high solubility for ozone.

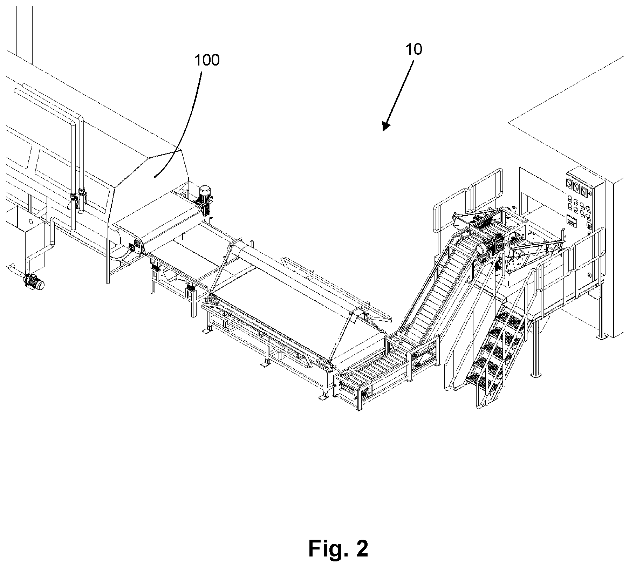

Fig. 2 shows a food processing line 10 comprising a blancher-cooler 100 at the left end. A combination of conveyor belts is used to transport the food items to a freezer, which can be seen at the right end. During the transport from the blancher-cooler 100 to the freezer the food items are exposed to a potentially contaminated atmosphere.

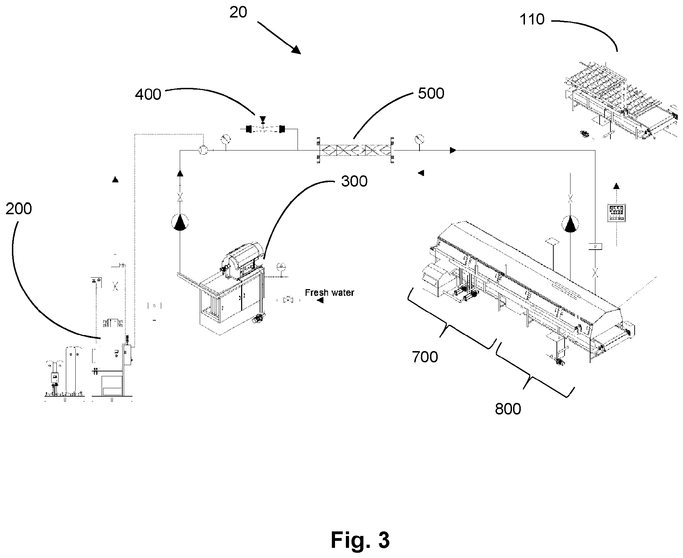

Figure 3 shows a blancher-cooler 100 according to the invention with a recirculating water system. The blancher-cooler 100 comprises a blanching unit 700 and a cooling unit 800. The blanching unit 700 is configured to blanch food items and the cooling unit 800 is configured to cool the food items afterwards by directly applying and/or spraying the recirculating water onto the food items. The recirculating water is collected at the cooling unit 800 and pumped through the chiller 300. The ozone generator 200 may produce ozone, which may be injected into the cooled water with help of the ozone injector 400. The mixture of gaseous ozone and recirculated water may be passed through a static mixer 500.

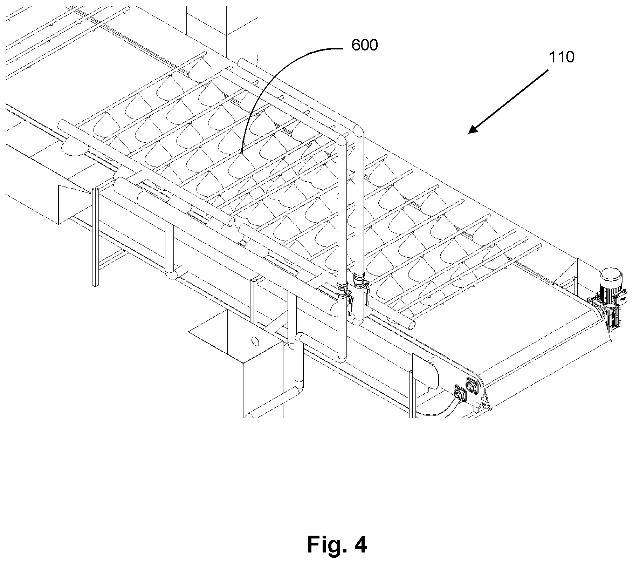

Figure 4 shows an inside view of a blancher-cooler 100 in a preferred embodiment. The nozzles may spray the cooled, ozonated water of the recirculating system directly on the food items inside the blancher-cooler. A sensor 600 may be positioned close to the hole in the nozzle the recirculated water is exiting the nozzle in order to measure the concentration of dissolved ozone and/or the pH value of the water. By applying the cooled water directly on the food items inside the blancher-cooler 100 the disadvantage of extended cooking time and extended exposure to contamination sources by transporting the food items to another process station, can be overcome.

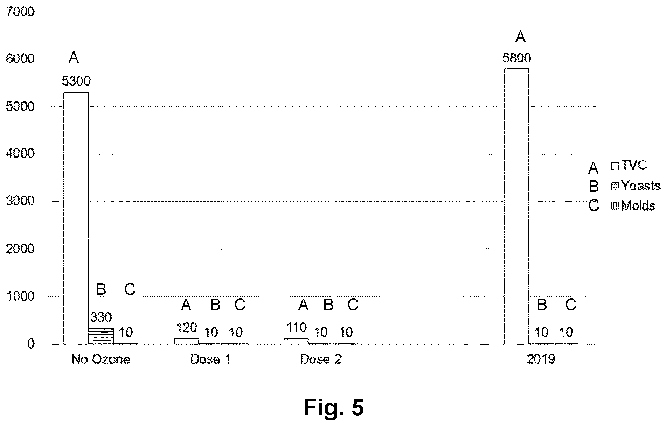

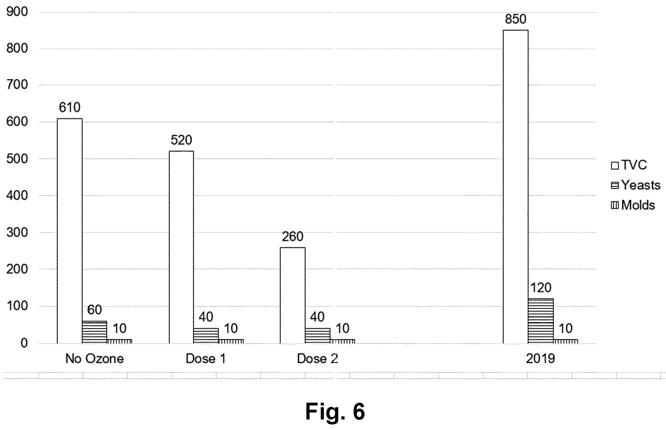

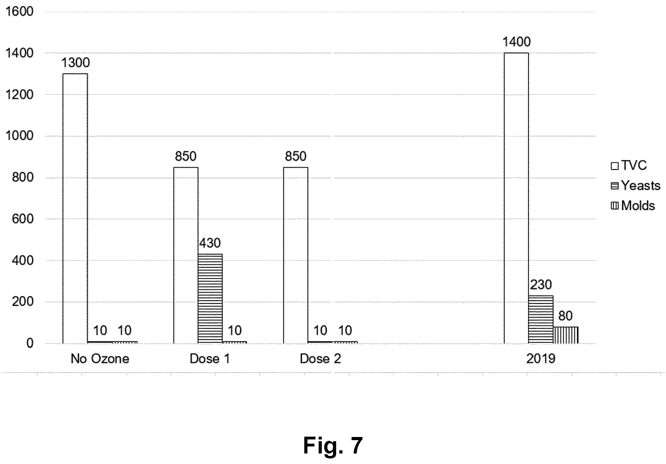

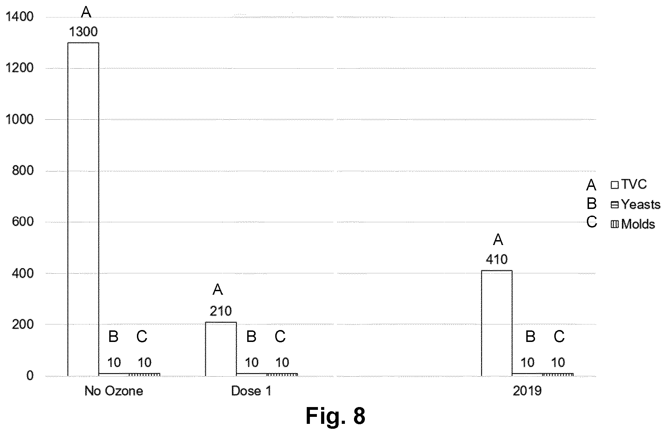

Figures 5-8 are showing the effects of the treatment with ozonated water using the system disclosed in this document for different food samples. The results depend on pesticides applied, fruits maturity, defects on raw material, etc. In general the TVC (total viable count, a quantitative estimate of the concentration of all microorganisms such as bacteria, yeast or mould spores in a sample), and the quantity of yeast and moulds are reduced by using the solution described in this document.

## DETAILED DESCRIPTION OF THE INVENTION

The Ozone generator 200 constantly produces gaseous $O_3$ at a concentration of 150 g/m$^3$. The gas is then mixed and dissolved into process water through via direct gas injection. A static mixer 500 improves the mixing of both water and gaseous ozone to achieve even better solubility.

The mixture travels into stainless steel pipes and is sprayed directly on the fruits with a range of full cone spray nozzles. An online monitoring device is measuring the dissolved ozone (mg/L - ppm) as well as the pH value. The flow rate of the gas can be adjusted based on this measurements, to meet desired levels.

The sprayed water is collected from the cooler to a tank and is pumped to the chiller 300, where it is filtered to remove fruit residuals and cooled down to 1 °C to 10 °C, preferably 2 °C to 7 °C, most preferably 3 °C to 5 °C and then recirculates. The ozone is injected into the cold water. Ozone solubility is increased when it is added to cold water.

When ozone is dissolved in a liquid Henry's law is obeyed closely. Therefore, a saturation ratio must be determined (volume of gas dissolved / volume of liquid). Based on the saturation ratio of ozone the solubility of ozone can be expressed as shown in figure 1.

Mixing process is described by Henry Law as following

$$CL = CG \times S \times P$$

where:

CL = dissolved concentration in liquid (mg/l)
CG = gas concentration (g/m$^3$)
S = bunsen coefficient (solubility ratio), temperature dependent
P = gas pressure (atm)

Of course, other factor (pH, various water components that react with Ozone and gas escaping to atmosphere) will affect final solubility and mixture contents ratio.

The ozone is injected into 3 individual processing lines, each one operates separately from the others. A venturi injector or direct gas injection is used to inject the gas into the water. Then, the mixture passes through a static mixer where dissolution is increased and travels into the piping to be sprayed onto the product. All the hydraulic components are stainless steel made, a material that withstand ozone oxidation.

The cooler consists of a conveyor belt, where the product is placed on and overhead spray nozzles that inject the cold ozonated water on the product. The whole system is placed into a closed chamber to avoid contamination with neighbour equipment's and personnel.

The water drains into a tank where it is afterwards pumped to at least one chiller 300 to be cooled down again. Prior to the at least one chiller 300 there is a drum filter, type of roto-sieve that removes fruit residuals, small parts and solids from the water.

It is then infeed into e.g. a falling film chiller, which operates with ammonia as cooling liquid and lower its temperature to a range of 1 °C to 10 °C, preferably 2 °C to 7 °C, most preferably 3 °C to 5 °C. PT100 sensors control the cooling water temperature and regulate ammonia flow through the falling film plates (pillows).

The cooled water is pumped to the system again, following the same piping network line, where the ozone is added again with the ozone injector 400. The ozone injector 400 may be be a venturi injector, a direct gas injector or another type of injector configured to inject ozone.

A sensor 600 is placed close to the spray nozzles to monitoring online the ozone concentration and/ or the pH value of the water. Based on this measurement the flow rate of the ozone generator 200 to the specific line can be adjusted. The user may manually set the desired value.

Water flow rate in each line is constant. Temperature and ozone concentration are adjusted to meet requirements.

System Data

- Ozone Generator:

| | |
|---|---|
| Capacity: | 8-240 gr/hr @ an ozone concentration of 10.1 %wt |
| Ozone gaseous pressure: | up to 3 bar |
| Ozone concentration: | 150 to 300 g/Nm$^3$ (10-20 % WT/WT) |
| Maximum Flow Rate: | 28 l/min of gas |

| | |
|---|---|
| - Falling film chillers: | 3 Individual systems with a cooling capacity of 120 KWR, 150 KWR, 320 KWR respectively |
| Refrigerant: | Anhydrous $NH_3$ |
| Recirculated water Flow Rate: | 40 m$^3$/h per line, MAX, constantly |
| Pumps: | 30 m$^3$/h @3.0-3.5 bar |
| Water temperature: | Infeed: 3-7 °C, Return: 11-15 °C |

- Hydraulics:

All kind of piping, fittings and apparatus are sized as DN65 (2.5").

| | |
|---|---|
| Material: | Full stainless steel AISI304 |

| | |
|---|---|
| - Coolers: | Three individual Coolers, after each blancher. All of them are belt type with overhead spraying nozzles. |
| Capacity: | 2.5 - 3.0 - 5.0 tons per hour, referring to peaches, diced, sliced or halves. |
| Cooling time: | 3-7 min |
| Spray nozzles: | Whirljet full cone nozzles, PP, 20l/min/nozzle |
| Destruction unit: | No destruction unit was required. Ozone concentration into water was monitored online and adjusted to lower desired levels, while coolers being closed chambers themselves were trapping escaping ozone, which was then mixed with moisture inside it and being heavy mixture again was drained into recirculation tanks. |

Testing - System monitoring

The entire process was monitored during testing/trial period. Measures and analysis of products and water were done all the time to ensure specifications compliance, process safety and hazards avoidance and food safety.

Main scope was to estimate lower ozone concentration into water in order to eliminate pathogens and bacteria. Regular samples analysis was performed to examine behaviour of the product to various ozone concentrations respectively.

On the other hand, ended product was examined, directly after cooling and after a short period in the cold storage (approximately 20-30 days) to ensure that ended product is not affected in colour, texture, moisture, proteins and appearance.

The above combination, along with other parameters (water temperature, pH, extra chemical additives to the water and pesticide control to estimate third party ingredients on the product that may affect Ozone efficiency) were used to estimate the appropriate range values for Ozone to be as effective as possible, remaining safe at all times for both employees and foods themselves.

Results - Analysis & Measurements

| | |
|---|---|
| Samples examined: | Peaches - Yellow cling (Andros, Katerina, A37, Everts), Whit-Nectarines, Apricots - Bebeco |
| Shape: | Diced 10x10, slices, chunks and halves |
| pH values: | Apricots: 3.5-4.5 |
| | Peaches: 3.8-4.7 |
| | Pure fresh water: 7.0-7.4 |
| Water additives: | Citric acid, anhydrous 0.10 ppm of $ClO_2$ residuals to fresh water added (10 % of total water flow) |

Typical Samples Analysis of peach dices:
Peaches diced 10x10, Andros variety
For the results of the analysis, please confer table 1.
Ozone injected into the closed loop system achieves:

- Treatment of the recirculating water - according to the customer observations the water in the chiller is clear and transparent
- Preventing biofilm formation on the heat exchanger and the basin - more efficient performance of the equipment, no energy loss as the heat exchange remains clean
- Less cleaning required - according to the customer the need to stop the production and clean the machines every 3-4 days.
- Water with dissolved ozone maintained the cooling section of the blancher clean and prevents the fruits from adhere the sides of the equipment that can lead to the outbreak.
- Ozonated cold water reduced the microbiology load by 2 logs and/or orders of magnitude, took down the yeasts and moulds.
- The layer of ozonated water on the fruits prevented the fruits from getting contaminated in the transition between the heat-controlled equipment - blancher and freezer.
- Reduced oxidation time of the fruits - more time to further process the produce.
- No alteration of the chemical or physical properties of the fruits, after storage at -20 °C for 90 days.

Table 1: Results of the analysis

| Ozone concentration: 0.0 ppm (At injection point) | | | |
|---|---|---|---|
| **Parameter** | **Method** | **Result** | **Unit** |
| TVC@30 °C | ISO 4833:-1:2013 | $6.1x10^3$ | cfu/gr |
| Yeasts | ISO 21527-1:2008 | Estimated 120 | cfu/gr |
| Moulds | ISO 21527-1:2008 | <10 | cfu/gr |

Ozone concentration: 1.65 ppm (At injection point - spray nozzles)

| **Parameter** | **Method** | **Result** | **Unit** |
|---|---|---|---|
| TVC@30 °C | ISO 4833:-1:2013 | $2.6x10^2$ | cfu/gr |
| Yeasts | ISO 21527-1:2008 | Presence and <40 | cfu/gr |
| Moulds | ISO 21527-1:2008 | <10 | cfu/gr |

Ozone concentration: 2.25 ppm (At injection point - spray nozzles)

| Parameter | Method | Result | Unit |
|-----------|--------|--------|------|
| TVC@30 °C | ISO 4833:-1:2013 | Presence and <40 | cfu/gr |
| Yeasts | ISO 21527-1:2008 | <10 | cfu/gr |
| Moulds | ISO 21527-1:2008 | <10 | cfu/gr |

GLOSSARY

Venturi nozzle

A Venturi nozzle (also called Venturi tube, developed by Giovanni Battista Venturi) consists of a smooth-walled pipe section with a constriction of the cross-section, for example by two cones directed towards each other and united at the point of their smallest diameter. At this point a sampling tube is placed next to it.

REFERENCES

| 10 | food processing line |
|----|----------------------|
| 100 | blancher-cooler |
| 110 | interior of a blancher cooler |
| 20 | blancher-cooler with recirculating water system |
| 200 | ozone generator |
| 300 | chiller |
| 400 | ozone injector |
| 500 | static mixer |
| 600 | sensor |
| 700 | blanching unit |
| 800 | cooling unit |

**Claims**

1.   A blancher-cooler (100) system for treating a food item, comprising:

a blanching unit (700) configured to blanch a food item,
a cooling unit (800) configured to cool the food item, wherein the cooling unit comprises:
a recirculating water system configured to apply recirculating water to said food item; wherein said recirculating water system is configured to introduce ozone into said recirculating water; wherein said recirculating water system is configured to apply said recirculating water to said food item after said ozone is introduced into said recirculating water; **characterized in that** the system further comprises
a chiller (300) configured to cool said recirculating water to a temperature in the range of 1°C to 10 °C; and
a collecting system configured to collect the recirculating water after application to the food item, wherein the collected recirculating water is pumped to the chiller (300) and cooled down to or kept at a temperature within a temperature range of 1° C to 10 °C.

2.   A blancher-cooler (100) system for treating a food item according to claim 1, where said chiller (300) is configured to cool said recirculating water to a temperature in the range of 2 °C to 7 °C, preferably 3 °C to 5 °C.

3.   A blancher-cooler (100) system for treating a food item according to any of the preceding claims, further comprising an ozone injector (400), wherein said ozone injector (400) is configured to inject ozone in said recirculating water, and wherein said ozone injector (400) is either a Venturi injector or a direct gas injector.

4.   A blancher-cooler (100) system for treating a food item according to any of the preceding claims, wherein a mixture of said recirculating water and said ozone passes through a static mixer (500) before being sprayed onto the product.

5. A blancher-cooler (100) system for treating a food item according to any of the preceding claims, wherein said recirculating water is filtered to remove residuals before being applied to said food item.

6. A blancher-cooler (100) system for treating a food item according to any of the preceding claims, further comprising a monitoring device comprising at least a sensor (600), said monitoring device is configured to measure the concentration of said ozone dissolved in said recirculating water and/or pH-value of said recirculating water.

7. A blancher-cooler (100) system for treating a food item according to claim 6, further comprising a device configured to adjust the concentration of said ozone dissolved in said recirculating water based on a measurement by said monitoring device.

8. A blancher-cooler (100) system for treating a food item according to any of the preceding claims, wherein
the concentration of said ozone in said recirculating water is kept at a constant level at the point where the sensor (600) is measuring the concentration of said dissolved ozone.

9. A system for treating a food item comprising multiple blancher-coolers (100) according to any preceding claim, wherein each blancher-cooler (100) is part of at least one of a variety of individual processing lines, wherein each said individual processing line operates separately from the others.

10. A system for treating a food item according to claim 9, wherein water temperature and/or ozone concentration are adjustable for each said individual processing line.

11. A method to treat a food item, comprising the following steps:

    providing a blancher-cooler (100) system according to any of claim 1 to 8 or a system according to any of claims 9 or 10;
    blanching said food item inside said device;
    treating said food item with ozonated water that is recirculated in said device.


**Patentansprüche**

1. System eines Blanchierkühlers (100) zum Behandeln eines Lebensmittels, umfassend:

    eine Blanchiereinheit (700), die konfiguriert ist, um ein Lebensmittel zu blanchieren,
    eine Kühleinheit (800), die konfiguriert ist, um das Lebensmittel zu kühlen, wobei die Kühleinheit umfasst:

        ein Umlaufwassersystem, das konfiguriert ist, um Umlaufwasser auf das Lebensmittel aufzutragen; wobei das Umlaufwassersystem konfiguriert ist, um Ozon in das Umlaufwasser einzuführen; wobei das Umlaufwassersystem konfiguriert ist, um das Umlaufwasser auf das Lebensmittel aufzutragen, nachdem das Ozon in das Umlaufwasser eingeführt wird; **dadurch gekennzeichnet, dass** das System ferner umfasst
        eine Kälteanlage (300), die konfiguriert ist, um das Umlaufwasser auf eine Temperatur in dem Bereich von 1 °C bis 10 °C zu kühlen; und
        ein Sammelsystem, das konfiguriert ist, um das Umlaufwasser nach der Auftragung auf das Lebensmittel zu sammeln, wobei das gesammelte Umlaufwasser in die Kälteanlage (300) gepumpt und auf eine Temperatur innerhalb eines Temperaturbereichs von 1 °C bis 10 °C abgekühlt oder auf dieser gehalten wird.

2. System eines Blanchierkühlers (100) zum Behandeln eines Lebensmittels nach Anspruch 1, wobei die Kälteanlage (300) konfiguriert ist, um das Umlaufwasser auf eine Temperatur in dem Bereich von 2 °C bis 7 °C, vorzugsweise 3 °C bis 5 °C, zu kühlen.

3. System eines Blanchierkühlers (100) zum Behandeln eines Lebensmittels nach einem der vorstehenden Ansprüche, ferner umfassend einen Ozoninjektor (400), wobei der Ozoninjektor (400) konfiguriert ist, um Ozon in das Umlaufwasser zu injizieren, und wobei der Ozoninjektor (400) entweder ein Venturi-Injektor oder ein Direktgasinjektor ist.

4. System eines Blanchierkühlers (100) zum Behandeln eines Lebensmittels nach einem der vorstehenden Ansprüche, wobei eine Mischung aus dem Umlaufwasser und dem Ozon durch einen statischen Mischer (500) fließt, bevor diese auf das Produkt gesprüht wird.

5. System eines Blanchierkühlers (100) zum Behandeln eines Lebensmittels nach einem der vorstehenden Ansprüche, wobei das Umlaufwasser gefiltert wird, um Rückstände zu entfernen, bevor dieses auf das Lebensmittel aufgetragen wird.

6. System eines Blanchierkühlers (100) zum Behandeln eines Lebensmittels nach einem der vorstehenden Ansprüche, ferner umfassend eine Überwachungsvorrichtung, umfassend mindestens einen Sensor (600), wobei die Überwachungsvorrichtung konfiguriert ist, um die Konzentration des Ozons, das in dem Umlaufwasser aufgelöst ist, und/oder den pH-Wert des Umlaufwassers zu messen.

7. System eines Blanchierkühlers (100) zum Behandeln eines Lebensmittels nach Anspruch 6, ferner umfassend eine Vorrichtung, die konfiguriert ist, um die Konzentration des Ozons, das in dem Umlaufwasser aufgelöst ist, basierend auf einer Messung durch die Überwachungsvorrichtung anzupassen.

8. System eines Blanchierkühlers (100) zum Behandeln eines Lebensmittels nach einem der vorstehenden Ansprüche, wobei
die Konzentration des Ozons in dem Umlaufwasser an dem Punkt, an dem der Sensor (600) die Konzentration des aufgelösten Ozons misst, auf einem konstanten Niveau gehalten wird.

9. System zum Behandeln eines Lebensmittels, umfassend mehrere Blanchierkühler (100) nach einem der vorstehenden Ansprüche, wobei jeder Blanchierkühler (100) ein Teil mindestens einer aus einer Auswahl von individuellen Verarbeitungslinien ist, wobei jede individuelle Verarbeitungslinie von den anderen getrennt arbeitet.

10. System zum Behandeln eines Lebensmittels nach Anspruch 9, wobei eine Wassertemperatur und/oder Ozonkonzentration für jede individuelle Verarbeitungslinie anpassbar sind.

11. Verfahren, um ein Lebensmittel zu behandeln, umfassend die folgenden Schritte:

Bereitstellen eines Systems eines Blanchierkühlers (100) nach einem der Ansprüche 1 bis 8 oder eines Systems nach einem der Ansprüche 9 oder 10;
Blanchieren des Lebensmittels in der Vorrichtung;
Behandeln des Lebensmittels mit ozonisiertem Wasser, das in der Vorrichtung in Umlauf gebracht wird.

**Revendications**

1. Système de blanchisseur-refroidisseur (100) permettant de traiter un produit alimentaire, comprenant :

une unité de blanchissement (700) configurée pour blanchir un produit alimentaire,
une unité de refroidissement (800) configurée pour refroidir l'aliment, dans lequel l'unité de refroidissement comprend :

un système d'eau à recirculation conçu pour appliquer de l'eau à recirculation audit produit alimentaire ; dans lequel ledit système d'eau de recirculation est conçu pour introduire de l'ozone dans ladite eau de recirculation ; dans lequel ledit système d'eau de recirculation est conçu pour appliquer ladite eau de recirculation audit produit alimentaire après l'introduction dudit ozone dans ladite eau de recirculation ; **caractérisé en ce que** le système comprend en outre
un refroidisseur (300) configuré pour refroidir ladite eau de recirculation à une température allant de 1 °C à 10 °C ; et
un système de collecte configuré pour collecter l'eau de recirculation après l'application au produit alimentaire, dans lequel l'eau de recirculation collectée est pompée vers le refroidisseur (300) et refroidie jusqu'à ou maintenue à une température comprise dans une plage de température de 1 °C à 10 °C.

2. Système blanchisseur-refroidisseur (100) permettant de traiter un produit alimentaire selon la revendication 1, où ledit refroidisseur (300) est configuré pour refroidir ladite eau de recirculation à une température dans la plage de 2 °C à 7 °C, de préférence 3 °C à 5 °C.

3. Système blanchisseur-refroidisseur (100) permettant de traiter un produit alimentaire selon l'une quelconque des revendications précédentes, comprenant en outre un injecteur d'ozone (400), dans lequel ledit injecteur d'ozone (400) est configuré pour injecter de l'ozone dans ladite eau de recirculation, et dans lequel ledit injecteur d'ozone (400) est soit un injecteur Venturi, soit un injecteur de gaz direct.

4. Système blanchisseur-refroidisseur (100) permettant de traiter un produit alimentaire selon l'une quelconque des revendications précédentes, dans lequel un mélange de ladite eau de recirculation et dudit ozone passe à travers un mélangeur statique (500) avant d'être pulvérisé sur le produit.

5. Système blanchisseur-refroidisseur (100) permettant de traiter un article alimentaire selon l'une quelconque des revendications précédentes, dans lequel ladite eau de recirculation est filtrée pour éliminer les résidus avant d'être appliquée audit article alimentaire.

6. Système de blanchisseur-refroidisseur (100) permettant de traiter un produit alimentaire selon l'une quelconque des revendications précédentes, comprenant en outre un dispositif de surveillance comprenant au moins un capteur (600), ledit dispositif de surveillance est configuré pour mesurer la concentration dudit ozone dissous dans ladite eau de recirculation et/ou la valeur du pH de ladite eau de recirculation.

7. Système blanchisseur-refroidisseur (100) permettant de traiter un produit alimentaire selon la revendication 6, comprenant en outre un dispositif configuré pour ajuster la concentration dudit ozone dissous dans ladite eau de recirculation sur la base d'une mesure par ledit dispositif de surveillance.

8. Système blanchisseur-refroidisseur (100) permettant de traiter un article alimentaire selon l'une quelconque des revendications précédentes, dans lequel
la concentration dudit ozone dans ladite eau de recirculation est maintenue à un niveau constant au point où le capteur (600) mesure la concentration dudit ozone dissous.

9. Système permettant de traiter un article alimentaire comprenant plusieurs blanchisseurs-refroidisseurs (100) selon l'une quelconque revendication précédente, dans lequel chaque blanchisseur-refroidisseur (100) fait partie d'au moins l'une parmi une variété de lignes de traitement individuelles, dans lequel chaque dite ligne de traitement individuelle fonctionne séparément des autres.

10. Système de traitement d'un article alimentaire selon la revendication 9, dans lequel la température de l'eau et/ou la concentration en ozone sont ajustables pour chaque ligne de traitement individuelle.

11. Procédé permettant de traiter un produit alimentaire, comprenant les étapes suivantes :

la fourniture d'un système blanchisseur-refroidisseur (100) selon l'une quelconque des revendications 1 à 8 ou un système selon l'une quelconque des revendications 9 ou 10 ;
le blanchissement dudit aliment à l'intérieur dudit dispositif ;
le traitement dudit article alimentaire avec de l'eau ozonée qui est remise en circulation dans ledit dispositif.

**Fig. 1**

**Fig. 2**

20

110

400

500

200

300

Fresh water

700

800

**Fig. 3**

**Fig. 4**

**Fig. 5**

**Fig. 6**

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090277342 A1
- US 2003156978 A1
- WO 2009034565 A2
- JP H02203739 A
- US 6514459 B1